(19) **Europäisches Patentamt**
**European Patent Office**
**Office européen des brevets**

(11) **EP 2 011 730 B1**

(12) **EUROPEAN PATENT SPECIFICATION**

(45) Date of publication and mention
of the grant of the patent:
**28.11.2012 Bulletin 2012/48**

(51) Int Cl.:
***B62L 3/08*** *(2006.01)*     ***B60T 11/04*** *(2006.01)*

(21) Application number: **07111804.6**

(22) Date of filing: **05.07.2007**

(54) **Safety braking system**

Sicherheitsbremssystem

Système de freinage de sécurité

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**07.01.2009 Bulletin 2009/02**

(73) Proprietor: **Tseng, Ton-Rong
220 Taipei County (TW)**

(72) Inventor: **Tseng, Ton-Rong
220 Taipei County (TW)**

(74) Representative: **Viering, Jentschura & Partner
Grillparzerstrasse 14
81675 München (DE)**

(56) References cited:
EP-A- 1 035 009     DE-A1- 19 951 535
DE-U1- 20 309 134     FR-A- 907 527
GB-A- 2 175 657     US-A1- 2003 140 724

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND OF THE INVENTION**

(a) Field of the Invention

The present invention is related to a safety braking system, and more particularly to one that effectively improve braking mechanism of a mini type or linear 2-wheel vehicle, e.g., a bike or motorcycle, upgrade safety, and minimize injuries due to improper control, application, or operation of a brake.

(b) Description of the Prior Art:

A brake is a safety device, also an extremely important component for vehicles; improper application or poor design of the brake frequently results in traffic accident even causes the driver and/or a third party to sustain major hazard or loss.

Essentially the brake operates by having linings to tightly pull or clip a brake disc or drum. In a light-duty vehicle, e.g., a bike, it is usually designed with linings to directly pull or clip tight a rim of a wheel of the bike. A hand brake is usually adapted to a bike, motorcycle or other light-duty vehicle while larger vehicles usually operate mechanical brake or power aided brake. However, all these types of brakes are found with many drawbacks, and the most serious and thus most important drawback is insufficient braking force or difficulty in managing the braking force, contributing to or aggravate major traffic accident or injuries.

For being light, convenient, easy manipulation, sold at affordable price, a linear two-wheel bike is most popular among light-duty vehicles. A bike not only relied upon as a short-range transportation means, but also used as for traveling, sporting, or racing purpose provides diversified applications. A light-duty motorcycle is another familiar type of linear two-wheel vehicle.

Upon riding on a bike or a motorcycle, weight of the vehicle is supported only on a straight line. A bike or motorcycle for being instable due to having higher center of gravity, is vulnerable to deflect or slant or even slip and fall when subject to external force or voluntary swing to left or right by its rider. In case of applying a brake directly with a front wheel without applying a brake a rear wheel of the bike or the motorcycle, the already higher center of gravity would even more forward to significantly reduce stability of the frame and the rider to frequently result in accident. Therefore, while applying a brake on a bike or a motorcycle of linear two-wheel construction, the braking must be first applied on its rear wheel before applying a brake to the front wheel for safety reason. This is particularly important for a vehicle adapted with a front shock absorber. Braking the front wheel first on riding the vehicle adapted with the front shock absorber will cause the shock absorber to sink to bring further the center of gravity of the rider who is already in a position of comparatively higher center of gravity. Leaning forward plus the acceleration force would cause the vehicle to toss around and seriously threaten the life of the rider.

In a linear two-wheel bike or motorcycle, it is usually disposed with a hand brake and provided each to both of a right and a left handles. The left hand brake controls application of a brake for the front wheel; and the right one, the rear wheel. However, it may be the opposite case to some frames of the vehicles. That is, there is the absence of mandatory principle or standard on whether which hand brake should control which wheel, and that is totally left for the frame manufacturer, a bodywork shop or a rider to determine on discretion. This makes the vehicle particularly danger to one who is not a frequent rider or is using a brake stranger to him/her.

Furthermore, a rider when encountered by an emergency tends to naturally apply the hand brake mounted on the side where the imminent threaten is approaching instead of braking the rear wheel first before breaking the front wheel. That makes even dangerous to the rider has to do the right action in a quick response in facing an emergency situation.

A braking system that applies both wheel brakes when either of the handbrake levers is pulled, is known from US patent application 2003/0140724 A1.

**SUMMARY OF THE INVENTION**

The primary purpose of the present invention is to provide safe brake, which is mounted to a bike, motorcycle or any other vehicle provided with two independent hand brakes for both wheels, that makes sure of always braking the rear wheel before braking the front wheel disregarding the left or the right hand brake is applied first for achieving safe effects by helping stabilize the frame and prevent from turning over.

To achieve the purpose, a safe brake of the present invention is designed with two stages of braking mechanism, the primary mechanism and the secondary power transmission mechanism. Both hand brakes are linked to the primary mechanism where the braking force is transferred to the secondary power transmission mechanism for the secondary power transmission mechanism to transfer braking force to both brakes on a front wheel and a rear wheels to realize the control of having applied brake to the rear wheel first before the rear wheel.

The secondary power transmission mechanism in the safe brake of the present invention is related to a sheave comprised of two rollers. Two rollers move relatively to each other when the primary mechanism is subject to a braking force applied by a brake lever thus to cause a front wheel brake and a rear wheel brake to apply braking the front and the rear wheels in sequence.

Each roller further includes a larger wheel and a smaller wheel with each wheel provided with a groove along its edge. A cable winding up the larger wheel is then connected to a lead cable engaging the rear wheel brake; and a cable winding up the smaller wheel is then connected to a lead cable engaging the front wheel brake. Accordingly, upon applying a brake, all motive forces will pull the brake roller whether the right or the left hand brake lever is exercised to cause both rollers to have relative displacement for the brake rollers to operate the brake cable to realize consistent brake control mode. Whereas both brake rollers are not in the same diameter, a pull force exercised by the lead cable of the rear wheel brake placed on the larger roller is faster and greater than that by the lead cable of the front wheel brake placed on the smaller roller since the perimeter of the larger roller is longer than that of the smaller roller to ensure that the rear wheel is braked before the front wheel.

Design and construction of two relative rollers in a safety braking system of the present invention provide a type and functions of a pulley in physics to feature effort-saving; and the ratio between both rollers may vary depending on the model of the vehicle while allowing design or adjust braking force and the ratio of braking forces respectively applied on the front wheel and the rear wheel depending on the model of the vehicle.

The roller may be directly pulled closer or farther by a brake cable of the brake lever, or the brake cable is pulled by revolution using a pinion.

Furthermore, many improved design for the construction of a safety braking system may be realized according to the present invention. For example, two arc levers of the safety braking system pivoted to each other at the center of each arc lever; one side of the arc lever is connected to the brake cable of the brake lever while the other side in relation to the pivoting point is disposed with two wheels each with groove along its edge for each arc lever. The cable surrounding those two wheels each with groove along its edge at the distal end of the pivoting point is connected to the lead cable of the front wheel brake. By changing a distance between the wheel with groove along its edge and the pivoting point, an amount of change in the lead cable connected to where between two wheels with groove along its edge disposed to the outer side of the arc lever is greater than that of the lead cable disposed on an inner side of the arc lever to permit the rear wheel to be braked first before the front wheel. Alternatively, a brake lever brake cable is connected to one side of the arc lever; two wheels each with a groove along its edge are disposed on each arc lever on the opposite side to the pivoting point; two wheels on one arc lever are fixed to a same point on the arc lever and hold a lead cable jointly with another two wheels with a groove along its edge to cause the lead cable to create different amount of change. Furthermore, a brake lever brake cable is connected to one side of the arc lever; two wheels each with a groove along its edge are disposed to an arc lever on the opposite side to the pivoting point; and the lead cable held by another two wheels each with a groove along its edge is fixed to another arc lever to achieve the purpose of having a time delay in applying brake respectively for the front and the rear wheel of the vehicle.

By providing those three types of installations, multiple wheels each with a groove along its edge that connect the front and the rear brakes to be individually mounted to such that the position of those wheels each with a groove along its edge controlling the front wheel is closer to the pivoting point than those controlling the rear wheel is thus to produce different braking force and time delay; and a locating mechanism is provided for the rider to readjust the position of each wheel with a groove along its edge according to his/her riding behavior for improved safety.

## BRIEF DESCRIPTION OF THE DRAWINGS

Fig. 1 is a schematic view showing a bike mounted with a safety braking system of the present invention.
Fig. 2 is a perspective view of a first preferred embodiment of the present invention.
Fig. 3 is a sectional view of the first preferred embodiment of the present invention.
Fig. 4 is a floor plan of the first preferred embodiment of the present invention.
Fig. 5 is a schematic view showing an operating status of the preferred embodiment of the present invention.
Fig. 6 is a perspective view showing a second preferred embodiment of the present invention.
Fig. 7 is a sectional view of the second preferred embodiment of the present invention.
Fig. 8 is a floor plan of the second preferred embodiment of the present invention.
Fig. 9 is a schematic view showing an operating status of the second preferred embodiment of the present invention.
Fig. 10 is a schematic view showing that the second preferred embodiment of the present invention is laterally mounted.

Fig. 11 is a perspective view showing a perspective view of a third preferred embodiment of the present invention.
Fig. 12 is a schematic view showing the third preferred embodiment of the present invention.
Fig. 13 is a schematic view showing a locating mechanism in the present invention.
Fig. 14 is a schematic view showing another locating mechanism in the present invention.
Fig. 15 is a sectional view of the locating mechanism taken from Fig. 14.
Fig. 16 is a front view showing another preferred embodiment yet of the present invention.
Fig. 17 is a front view showing another preferred embodiment yet of the present invention.

**DETAILED DESCRIPTION OF THE PREFERRED EMBODIMENTS**

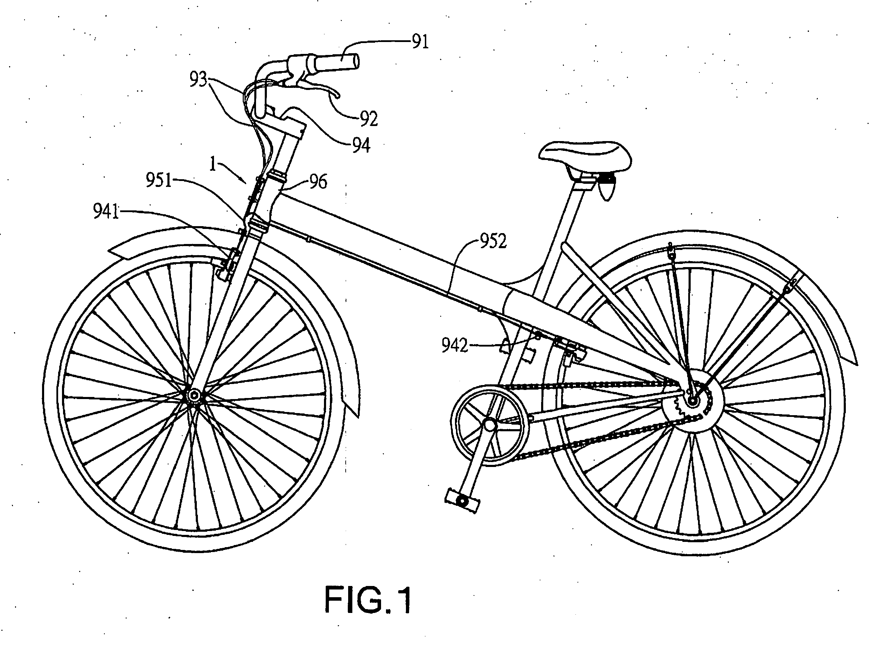

Referring to Fig. 1, the present invention is adapted to a bike, a light-duty motorcycle or any other light-duty vehicle provided with both left and right brake levers to respectively control braking a front wheel and a rear wheel, and the bike is taken as an example for the purpose hereunder. As illustrated, the bike is provided with a right handlebar and a left handlebar 91 respectively mounted with a manual brake lever 92; and a brake cable 93 connects both brake levers 92 to a safety braking system 1 of the present invention. The safety braking system 1 is mounted to a head tube 96 or where between both handlebars 91, or coupled to a stem 94 and connected to a lead cable 951 and a lead cable 952 respectively of a front wheel brake 941 and a rear wheel brake 942. Accordingly, when either of both brake levers 92 is pulled, the rear wheel brake 942 applies first a brake on the rear wheel and then the front wheel 941 applies a brake on the front wheel.

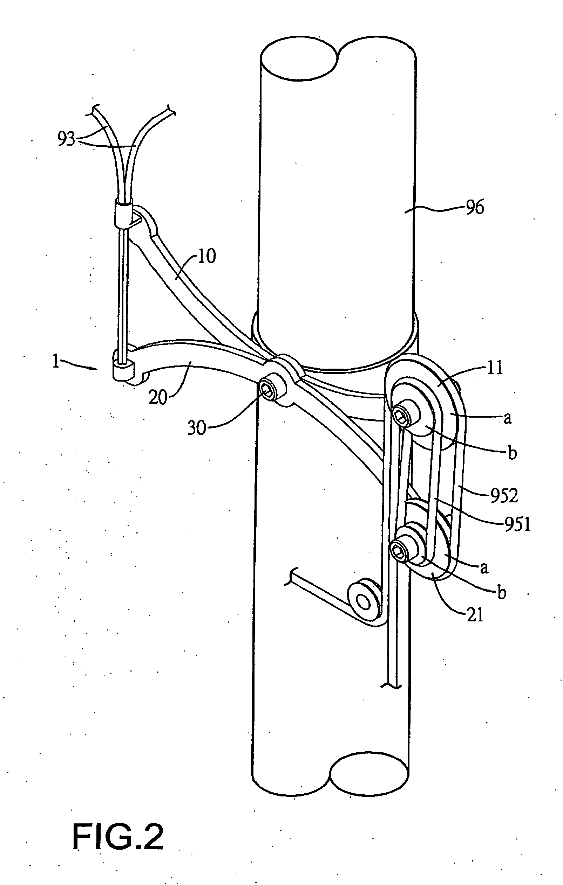

In a first preferred embodiment of the safety braking system 1 of the present invention as illustrated in Fig. 2, the safety braking system 1 mounted to the head tube 96 is comprised of two arc levers 10, 20 pivoted to each other at a pivoting point 30; two brake cables 93 are connected to one side of both arc levers 10, 20 to form a primary mechanism. On the opposite side of the pivoting point 30 are respectively provided with two rollers 11, 21 to form a secondary power transmission mechanism.

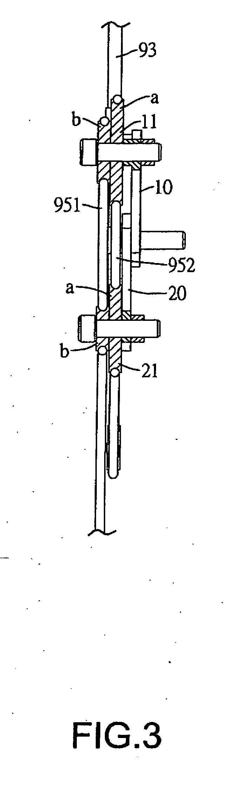

Now referring to Fig. 3, each roller 11, 21 includes a larger wheel *a* and smaller wheel *b* with each provided with a groove on its edge; both larger wheels *a* hold the lead cable 952 of the rear wheel brake; and both smaller wheels *b* hold the lead cable 951 of the front wheel brake.

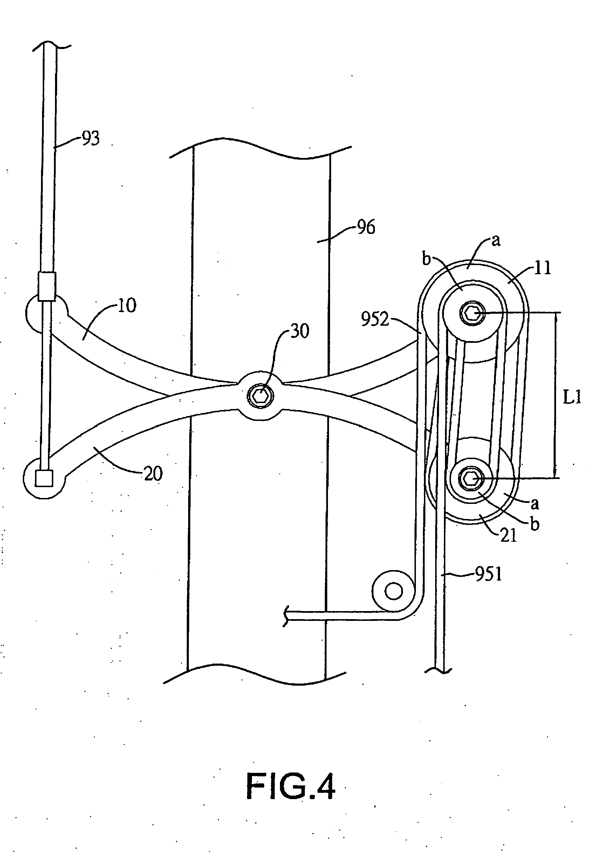

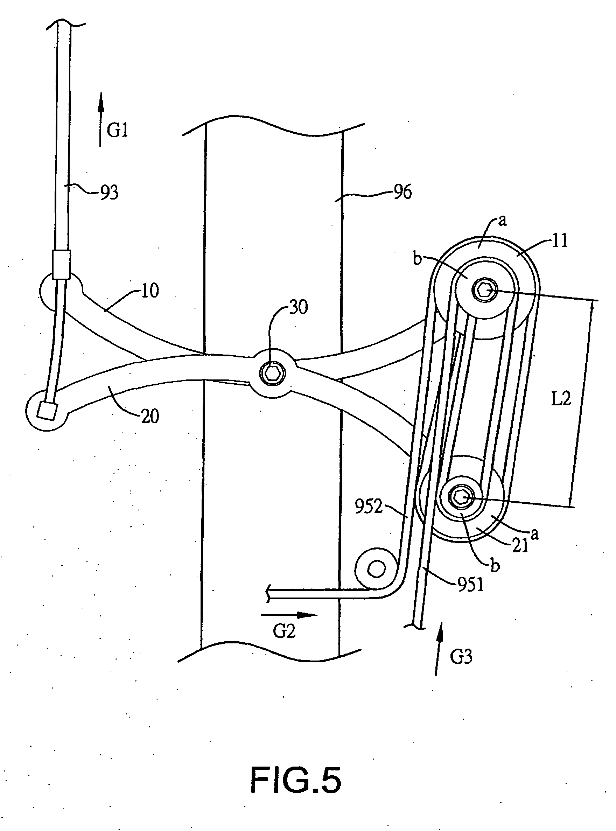

According to the operating status respectively illustrated in Figs. 4 and 5, a distance between centers of both rollers 11, 21 is designated as *L1* when the brake cable 93 connected to the brake lever is not yet pulled as illustrated in Fig. 4; when the brake cable 93 is pulled in a direction marked by an arrow G1 in Fig. 5, a braking force is created to move the primary mechanism comprised of both arc levers 10, 20. The primary mechanism transfers the braking force to the secondary power transmission mechanism, and the distance between both centers of rollers 11, 21 disposed on the opposite side of both arc levers 10, 20 relatively increase to that as designated by L2. Meanwhile, both of the lead cable 952 of the rear brake held by both larger wheels *a* of two rollers 11, 21 and the lead cable 951 of the front brake held by both smaller wheels *b* of two rollers 11, 21 create a pull force (as designated by arrows G2 and G3) for the secondary power transmission mechanism to respectively transfer the braking force to the front and the rear brakes; and the rear wheel brake 942 will first brake the rear wheel before the front wheel brake 941 applying a brake on the front wheel.

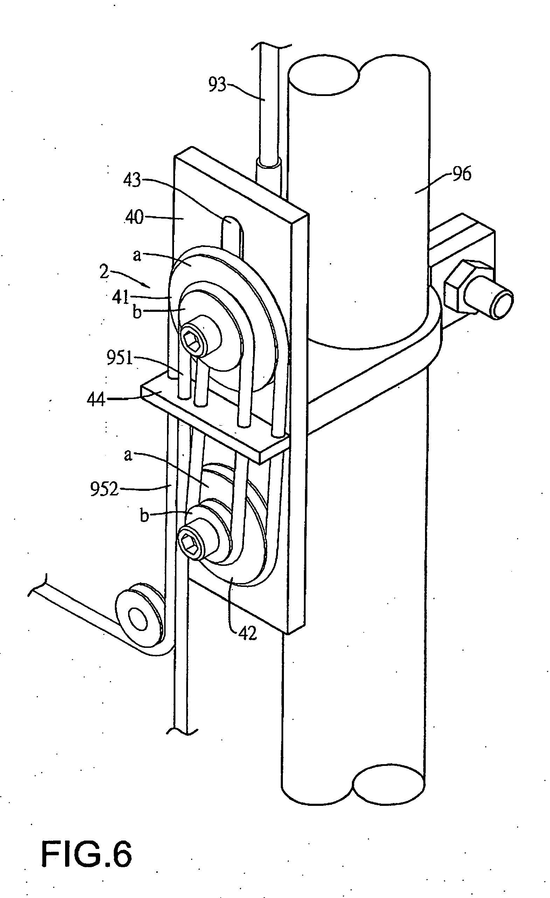

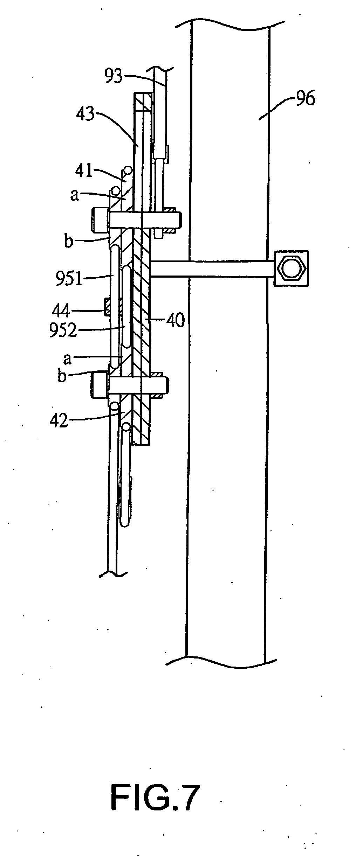

In another preferred embodiment of the present invention as illustrated in Figs. 6 and 7, a safety braking system 2 is disposed with a holding base 40 fixed to the head tube 96; an upper roller 41 and a lower roller 42 are provided on the holding base 40; the lower roller 42 may be provided as a stationary roller or a roller permitted to move downwardly; the upper roller 41 against the lower roller 42 displaces along a channel disposed on the holding base; and the brake cable 93 of the brake lever is directly connected to the upper roller 42. When the brake lever is applied, the brake cable 93 pulls the upper roller 42 to move upwardly. Each of both the upper and the lower rollers 41, 42 includes a larger wheel *a* and a smaller wheel *b* each having a groove along its edge; both larger wheels *a* hold a lead cable 952 of the rear brake and both smaller wheels *b* hold a lead cable 951 of the front brake; and both lead cables 951, 952 pass through a lead cable holding frame 44.

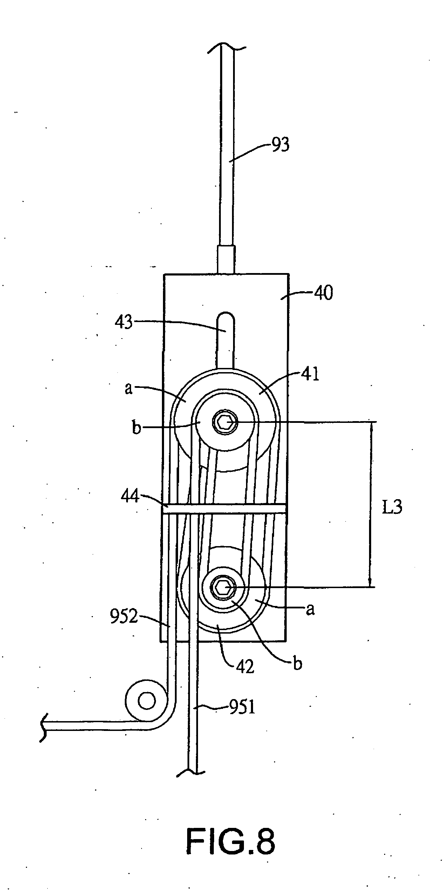

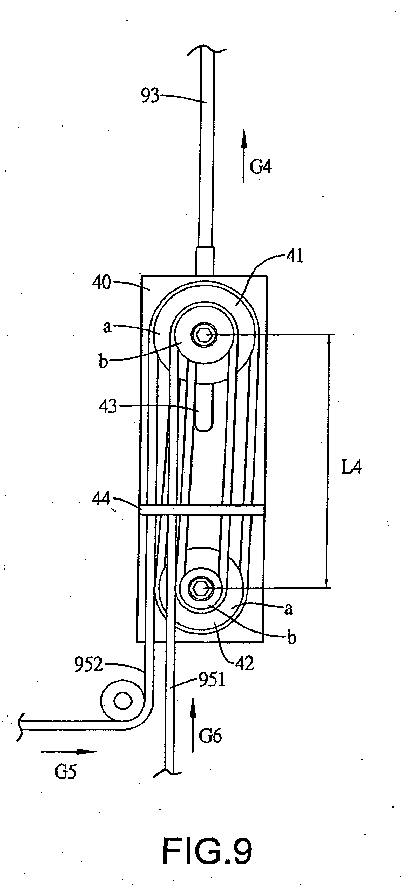

According to an operating status respectively illustrated in Figs. 8 and 9, a relative distance between both centers of the upper and the lower rollers 41, 42 is designated as *L3* as illustrated in Fig. 8 when a brake cable 93 connected to a brake lever is not yet pulled. When the brake cable 93 is pulled in a direction marked by an arrow G4 as illustrated in Fig. 9, a braking force is created, the upper roller 41 moves upward for the relative distance between both centers of the upper and the lower rollers 41, 42 is increased up to *L4*; and the braking force is transferred to both lead cables 951, 952 respectively of the front and the rear brakes. Meanwhile, both of the lead cable 952 of the rear brake held by both larger wheels *a* of two rollers 11, 21 and the lead cable 951 of the front brake held by both smaller wheels *b* of two rollers 11, 21 create a pull force (as designated by arrows G5 and G6) and the rear wheel brake 942 will first brake the rear wheel before the front wheel brake 941 applying a brake on the front wheel.

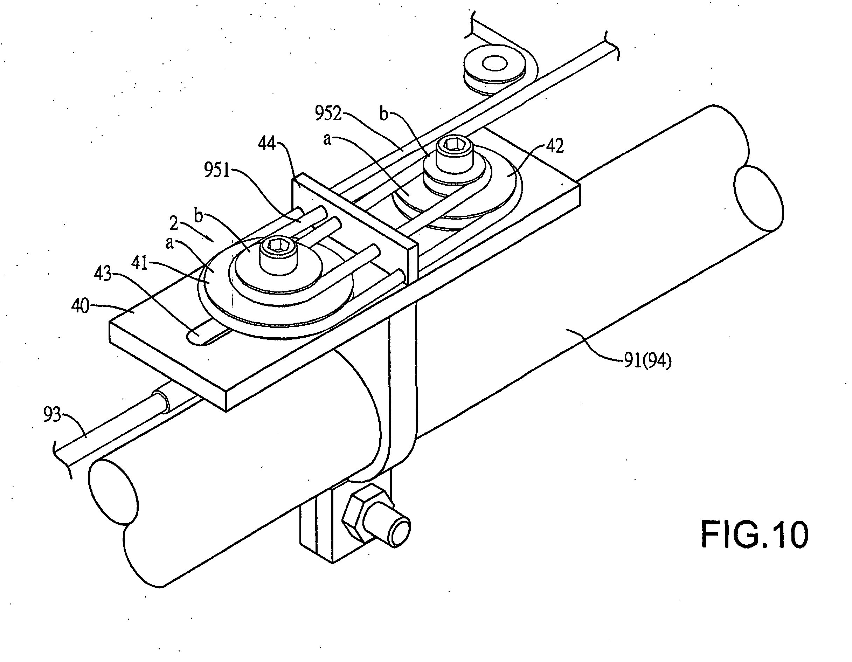

Alternatively, the safety braking system 2 of the present invention is mounted to at where appropriately between the right and the left handlebars 91 or the stem 94 connecting both handlebars and the head tube; and the safety braking system 2 may be mounted horizontally as illustrated in Fig. 10 or vertically as illustrated in Fig. 6.

The brake cable of the brake lever may be connected to a rack, i.e., the primary mechanism; and a gear set connected to both rollers bits the rack. Each roller includes a larger wheel and a smaller wheel with each having a groove along its edge, and a distance between both centers of two rollers relatively increases when the brake cable pulls both rollers on the rack, a variable summary design of the present invention protected by a patent.

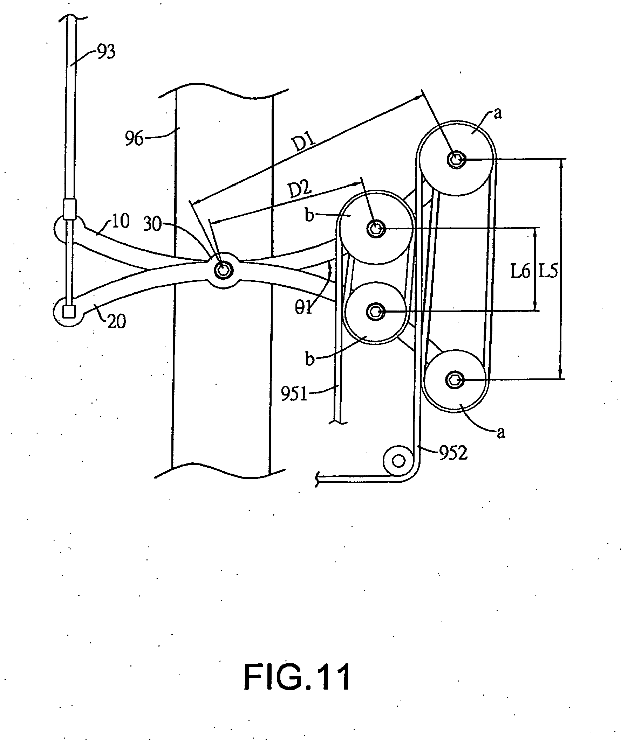

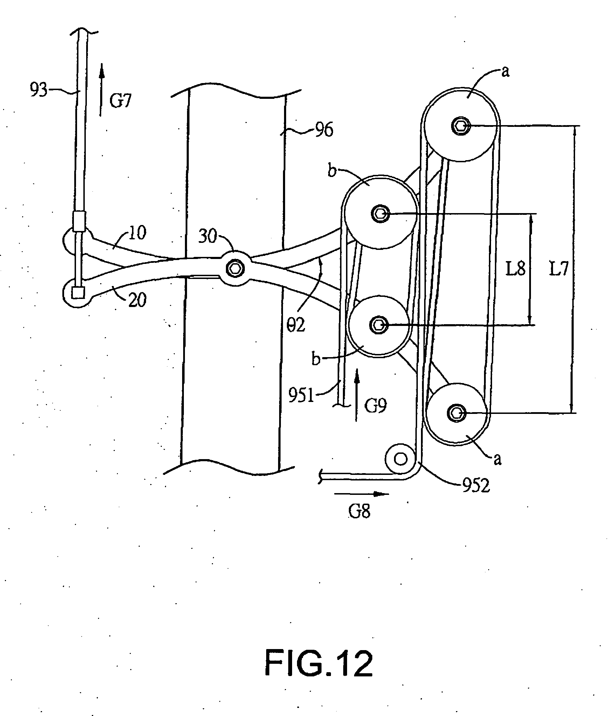

According to another preferred embodiment yet of the present invention as illustrated in Figs. 11, 12. The safety braking system 2 mounted to the head tube 96 has two arc levers 10, 20 pivoted to each other at a pivoting point 30. One side of both arc levers 10, 20 is connected to a brake cable 93 of the brake lever to form a primary mechanism; on the opposite side of the pivoting point 30 are respectively provided with two rollers *a, b,* with each having a groove along its edge, to form a secondary power transmission mechanism. Both wheels a hold a lead cable 952 of the rear wheel brake and another two wheels b hold a lead cable 951 of the front wheel brake. As illustrated, when the brake cable 93 connected to the brake lever is not pulled, a distance between both centers of two wheels *a* is designated as *L5* and a distance between both centers of two wheels *b, L6.* When the brake lever is applied by a rider to pull he brake cable 93 in a direction marked G7 as illustrated in Fig. 12, a braking force is generated for the primary mechanism comprised of both arc levers to move for transferring the braking force to the secondary power transmission mechanism and both distances L5, L6 on the opposite side of both arc levers increase up to that respectively designated as L7 and *L8*. Meanwhile, both of the lead cable 952 of the rear brake held by both wheels *a* and the lead cable 951 of the front brake held by both wheels b create a pull force (as designated by arrows G8 and G9) for the secondary power transmission mechanism to respectively transfer the braking force to the front and the rear brakes; and the rear wheel brake 942 will first brake the rear wheel before the front wheel brake 941 applying a brake on the front wheel. In the preferred embodiment, a distance D1 between an axes of the wheel *a* and the pivoting point 30 is greater than D2, a distance between an axis of the wheel b and the pivoting point. According to the law of tangent of trigonometric function:

$$2D_1 \times SIN\frac{\theta_1}{2} = L5 \qquad 2D_2 \times SIN\frac{\theta_1}{2} = L6$$

Therefore, when $\theta_1$ is enlarged to $\theta_2$, both distances L7, L8 between wheels *a* and wheels b are respectively:

$$2D_1 \times SIN\frac{\theta_2}{2} = L7 \qquad 2D_2 \times SIN\frac{\theta_2}{2} = L8$$

The distance increased thus is:

$$L7 - L5 = 2D_1 \times (SIN\frac{\theta_2}{2} - SIN\frac{\theta_1}{2})$$

$$L8 - L6 = 2D_2 \times (SIN\frac{\theta_2}{2} - SIN\frac{\theta_1}{2})$$

Accordingly, when D 1 is greater than D2, the distance increased between two wheels *a* is greater than that between two wheels b. That is, amount of change in the length of the lead cable 952 is greater than that of the lead cable 951, so that when both brake levers are pulled at the same time, the rear wheel brake operates first to brake.

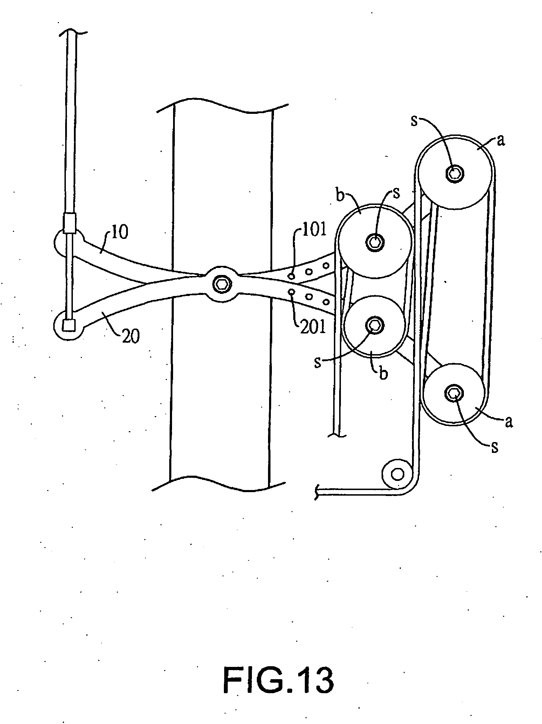

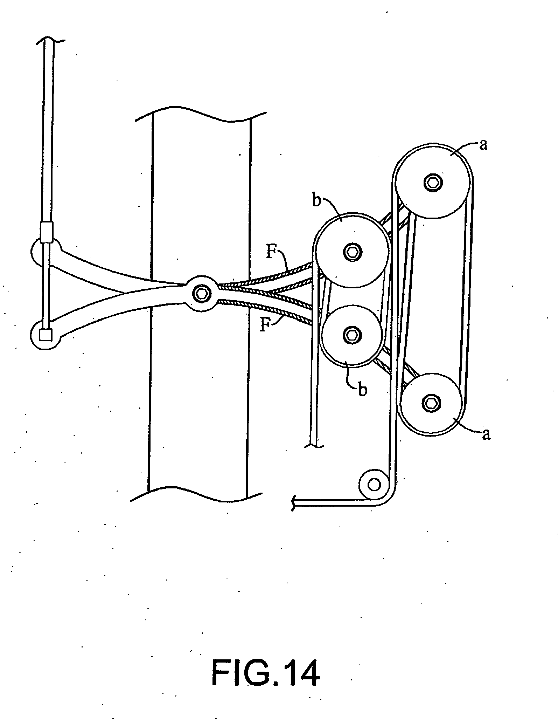

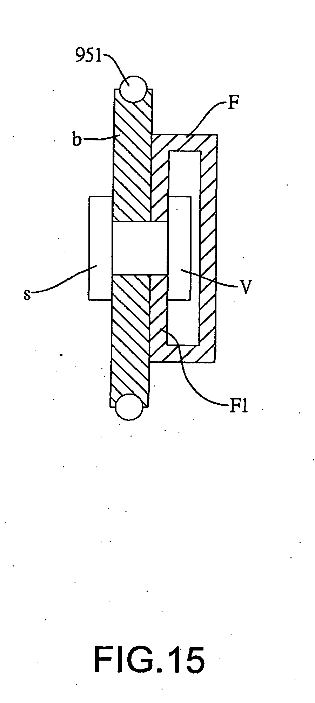

Referring to Figs. 13 and 14, a locating mechanism is disposed to both arc levers 10, 20 to allow both wheels *a, b* to adjust their positions on the arc levers as desired. As illustrated in Fig. 13, multiple holes 101, 201 are provided on both arc levers 10, 20; and a locking member S penetrates through selected holes 101, 102 on both arc levers 10, 20 and those wheels each having a groove along its edge to secure both arc levers 10, 20 to those wheels. The locking member S may be related to a screw or a fast connector. Alternatively as illustrated in Figs. 14 and 15, a chute F and a slide V combined with and placed in the chute F are disposed on each of both arc levers. When a locking member S is released, the wheel slides in the chute F to reach a preset location, and the locking member S pulls closer the slide V to compress with those wheels on a wind F1 of the chute F so to locate the arc levers to those wheels. The locking member S may be related to a screw or a fast connector. With the locating mechanism, the rider may adjust the position of each wheel having a groove along its edge according to his/her particular riding behavior to achieve the optimal braking effects.

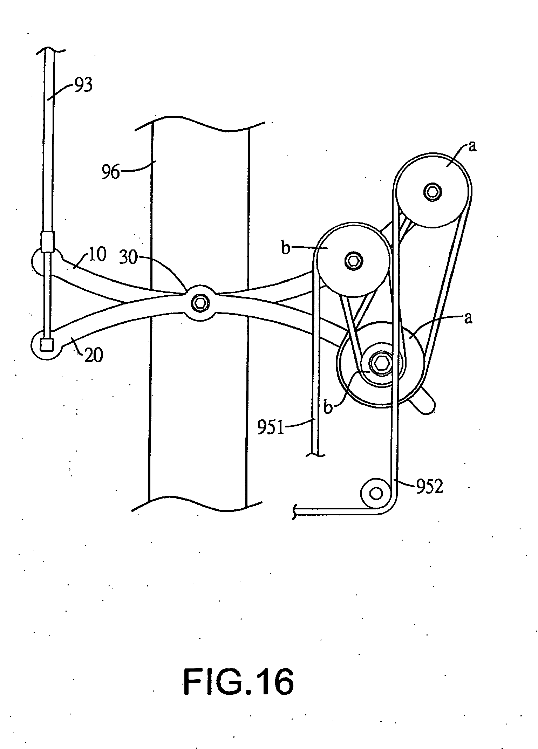

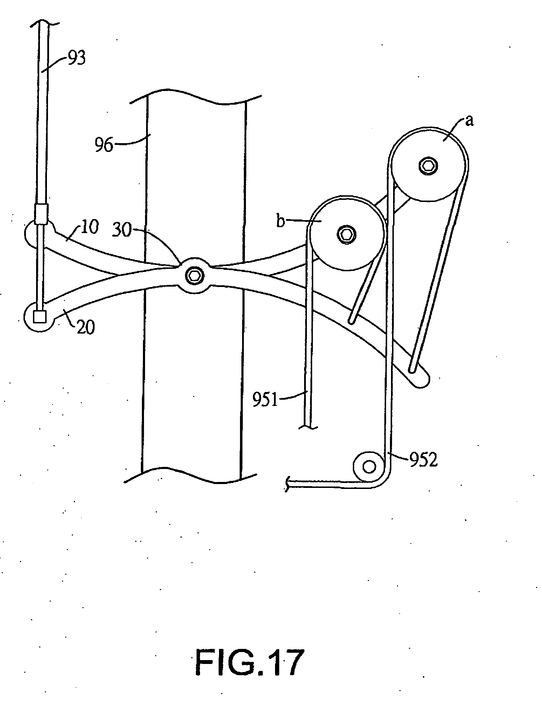

Now referring to Fig. 16, one wheel a and one wheel b on one arc lever are locked at a same point (concentrically) to achieve purpose of having the amount of change of the lead cable 952 become greater than that of the lead cable 951 thus to allow the rear wheel brake connected to the lead cable 952 to act first. Furthermore, as illustrated in Fig. 17, both ends respectively of the lead cable 951 and the lead cable 952 are directly fixed to the arc lever 20 to achieve the same purpose. The preferred embodiment illustrated in Figs. 16 and 17 may be provided with the same locating mechanism as that mounted to the preferred embodiment illustrated in Figs. 13, 14, and 15 to achieve the purpose of adjusting the position of each wheel having a groove along its edge on the arc levers.

The safety braking system 2 of the present invention may be mounted to where appropriately between both handlebars 91, on the stem 94 that connects both handlebars 91 and the head tube vertically or horizontally.

It is to be noted that the preferred embodiments disclosed in the specification and the accompanying drawings are not limiting the present invention; and that any construction, installation, or characteristics that is same or similar to that of the present invention should fall within the scope of the claims of the present invention.

**Claims**

1. A safety braking system (1) mountable to a bike, motorcycle or any other two-wheel linear type of vehicle comprising a right and a left brake lever (92) adapted to respectively control applying a brake to a front wheel and a rear wheel of the vehicle, further comprising a safety brake provided between both brake levers (92) and the front (941) and the rear wheel brakes (942); wherein the safety braking system (1) controls both the rear wheel brake and the front wheel brake to respectively apply the braking if one of the left brake lever and the right brake lever (92) is pulled, wherein the safety braking system comprises a primary mechanism and a secondary power transmission mechanism, both of the right and the left brake levers (92) being connected to the primary mechanism, the primary mechanism being adapted to transfer a braking force generated by pulling either brake lever (92) to the secondary power transmission mechanism; the braking force being further transferred to the front and the rear wheel brakes through the secondary power transmission mechanism,
**characterised in that** the secondary power transmission mechanism is related to a sheave comprised of two rollers (a, b), wherein both rollers hold a lead cable (951,952) from the front and the rear wheel brakes (941,942), and wherein both rollers move relative to each other when the braking force is applied by the brake lever (92) to the primary mechanism,
wherein each roller is comprised of a larger wheel (a) and a smaller wheel (b) each having a groove along its edge; wherein the larger wheel (a) holds a lead cable (952) from the rear brake; and wherein the smaller wheel (b) holds a lead cable (951) from the front brake, thereby effecting that a higher percentage of the braking force is supplied to the rear wheel than to the front wheel.

2. The safety braking system as claimed in Claim 1, **characterised in that** the safety braking system (1) has two arc levers (10, 20) pivotable with respect to each other at a pivoting point (30) coinciding with the respective centers of the arc levers (10, 20); one side of each arc lever being respectively connected to a brake cable (93) from the brake lever (92); the other side of each arc lever being respectively provided with a roller; each roller being comprised of a larger wheel (a) and a smaller wheel (b), each wheel having a groove along its edge; wherein the larger wheel (a) holds a lead cable (952) from the rear brake; wherein the smaller wheel (b) holds a lead cable (951) from the front brake.

3. A safety braking system (1) mountable to a bike, motorcycle or any other two-wheel linear type of vehicle adapted with a right and a left brake lever (92) adapted to respectively control applying a brake to a front wheel and a rear wheel of the vehicle, further comprising a safety brake provided between both brake levers (92) and the front (941) and the rear wheel brakes (942);

wherein the safety braking system (1) controls both the rear wheel brake (942) and the front wheel brake (941) to respectively apply the braking if one of the left brake lever and the right brake lever is pulled, **characterised in that** the safety braking system (1) further comprises a holding base (40) as well as an upper roller (41) and a lower roller (42) being disposed on the holding base (40); the lower roller (42) being stationary or allowed to move downwards; the upper roller (41) being movable along a channel disposed on the holding base (40); wherein corresponding brake cables (93) of each of the brake levers (92) are directly connected to the upper roller (41) such that the brake cables (93) are pulling the upper roller (41) to move upwardly along the channel when one of the brake levers (92) is pulled; wherein each of the upper roller (41) and the lower roller (42) is provided with a larger wheel and a smaller wheel, each of the wheels having a groove along its edge; the larger wheel (a) holding a lead cable (952) from the rear brake (942); and the smaller wheel (b) holding a lead cable (951) from the front brake (941).

4. The safety braking system as claimed in Claim 3, **characterised in that** the ratios between the larger (a) and the smaller rollers (b) are designed depending on model and frame of the vehicle to adjust for a proper braking force and a ratio of braking force between braking forces applied to the front (941) and the rear wheel brakes (942).

5. The safety braking system as claimed in Claim 4, **characterised in that** a lead cable holding frame (44) is provided on the holding base (40) for both lead cables (951,952) to penetrate through and to be secured on the holding frame (44).

6. A safety braking system (1) mountable to a bike, motorcycle or any other two-wheel linear type of vehicle adapted with a right and a left brake lever (92) adapted to respectively control applying a brake to a front wheel and a rear wheel of the vehicle, further comprising a safety brake provided between both brake levers (92) and the front (941) and the rear wheel brakes (942); wherein the safety braking system (1) controls both the rear wheel brake and the front wheel brake to respectively apply the braking if one of the left brake lever and the right brake lever (92) is pulled, **characterised in that** the safety brake comprises two arc levers (10,20) pivotable with respect to each other at a pivoting point (30) coinciding with the respective centers of the arc levers (10,20); one side of each arc lever being respectively connected to one of the brake cables (93) from both brake levers (92); an opposite side of each arc lever being respectively provided with two wheels, each wheel having a groove along its edge; wherein those two wheels which are more distanced way from the pivoting point hold a lead cable (952) from the rear wheel brake (941); and wherein the other two wheels which are closer to the pivoting point hold a lead cable (951) from the front wheel brake (941).

7. A safety braking system (1) mountable to a bike, motorcycle or any other two-wheel linear type of vehicle adapted with a right and a left brake lever (92) adapted to respectively control applying a brake to a front wheel and a rear wheel of the vehicle, further comprising a safety brake provided between both brake levers (92) and the front (941) and the rear wheel brakes (942); wherein the safety braking system (1) controls both the rear wheel brake and the front wheel brake to respectively apply the braking if one of the left brake lever and the right brake lever (92) is pulled, **characterised in that** the safety brake comprises two arc levers (10, 20) pivotable with respect to each other at a pivoting point (30) coinciding with the respective centers of the arc levers; (10, 20) one side of each arc lever being respectively connected to one of the brake cables (93) from both brake levers (92); an opposite side of one (10) of the arc levers being respectively provided with two wheels (a,b), each wheel having a groove along its edge; an opposite side of the other arc lever (20) is fixed to lead cables (951, 952) of the front wheel brake (941) and the rear wheel brake (942) held by the two wheels.

8. A safety braking system (1) mountable to a bike, motorcycle or any other two-wheel linear type of vehicle adapted with a right and a left brake lever (92) adapted to respectively control applying a brake to a front wheel and a rear wheel of the vehicle, further comprising a safety brake provided between both brake levers (92) and the front (941) and the rear wheel brakes (942);
wherein the safety braking system (1) controls both the rear wheel brake and the front wheel brake to respectively apply the braking if one of the left brake lever and the right brake lever (92) is pulled, **characterised in that** the safety brake comprises two arc levers (10, 20) pivotable with respect to each other at a pivoting point (30) coinciding with the respective centers of the arc levers (10, 20); one side of each arc lever being respectively connected to one of the brake cables (93) from the brake levers (92); an opposite side of each arc lever being respectively provided with two wheels, each wheel having a groove along its edge; wherein two of the wheels are fixed to the same point on one arc lever (20), wherein two of the wheels are fixed to different points of the other arc lever (10); wherein the arc lever (10) comprising the wheels fixed to different points is fixed to lead cables (951, 952) of the front wheel brake (941) and the rear wheel brake (942), wherein each lead cable is held by one wheel of one arc lever and one wheel of the other arc lever; wherein the two wheels fixed to the same point on one arc lever (20) differ in their size with respect to each other; and wherein the two wheels fixed to different points on the other arc lever (10) have the same size.

9. The improved construction of a safety braking system (1) as claimed in Claims 1, 2, 6, 7, and 8, **characterised in that** a locating mechanism is disposed to both arc levers (10, 20) to adjust the position of any of those wheels (a, b) each having a groove along its edge.

10. The improved construction of a safety braking system (1) as claimed in Claim 9, **characterised in that** the locating mechanism contains multiple holes (101,102) disposed on both arc levers (10, 20) and one or a plurality of locking members (5); wherein the locking members (5) penetrate through selected holes on both arc levers and those wheels (a, b) each having a groove along its edge to secure them in position.

11. The improved construction of a safety braking system (1) as claimed in Claim 10, **characterised in that** the locating mechanism is comprised of a slide (v) disposed on both arc levers (10,20) and a slider combined to and placed in the slide (v) for those wheels each having a groove along its edge to move along the slide (v); and a retaining mechanism is disposed to secure the position of the wheel (a, b) having a groove along its edge.

12. The improved construction of a safety braking system as claimed in Claim 11, **characterised in that** the retaining mechanism contains a locking member (s) penetrating the slider and those wheels (a, b) with a groove along its edge.

13. The improved construction of a safety braking system as claimed in Claim 11, wherein the locking member (s) relates to a fast connector.

**Patentansprüche**

1. Ein Sicherheitsbremssystem (1), welches anbringbar an ein Fahrrad, an ein Motorrad oder an irgendeine andere Art von zweirädrigen linearen Fahrzeug ist, welches einen rechten und einen linken Bremshebel (92) aufweist, welche dazu eingerichtet sind, um jeweils das Anwenden einer Bremse auf ein Vorderrad bzw. auf ein Hinterrad des Fahrzeugs zu steuern, welches ferner aufweist eine Sicherheitsbremse, welche zwischen den beiden Bremshebeln (92) und der Vorderradbremse (941) und der Hinterradbremse (942) bereitgestellt ist, wobei das Sicherheitsbremssystem (1) die Vorderradbremse (941) und die Hinterradbremse (942) steuert, um jeweils das Bremsen anzuwenden, falls der linke Bremshebel oder der rechte Bremshebel (92) gezogen wird,
wobei das Sicherheitsbremssystem einen primären Mechanismus und einen sekundären Kraftübertragungsmechanismus aufweist, wobei der rechte und der linke Bremshebel (92) mit dem primären Mechanismus verbunden sind, wobei der primäre Mechanismus dazu eingerichtet ist, eine Bremskraft, welche durch Ziehen an einem der beiden Bremshebel (92) erzeugt wird, an den sekundären Kraftübertragungsmechanismus zu übertragen, wobei die Bremskraft durch den sekundären Kraftübertragungsmechanismus weiter an die Vorderradbremse und an die Hinterradbremse übertragen wird,
**dadurch gekennzeichnet, dass**
sich der sekundäre Kraftübertragungsmechanismus bezieht auf eine Seilscheibe, welche zwei Rollen (a,b) aufweist, wobei beide Rollen ein Anschlussseil (951,952) der Vorderradbremse (941) und der Hinterradbremse (942) halten und wobei beide Rollen sich relativ zu einander bewegen, wenn die Bremskraft durch den Bremshebel (92) auf den primären Mechanismus aufgebracht wird,
wobei jede Rolle ein größeres Rad (a) und ein kleineres Rad (b) aufweist, wobei jedes Rad eine Nut entlang seines Rands aufweist, wobei das größere Rad (a) ein Anschlussseil (952) der Hinterbremse hält und wobei das kleinere Rad (b) ein Anschlussseil (951) der Vorderbremse hält, dadurch bewirkend, dass ein höherer Prozentsatz der Bremskraft an das Hinterrad als an das Vorderrad übertragen wird.

2. Das Sicherheitsbremssystem gemäß Anspruch 1, **dadurch gekennzeichnet, dass** das Sicherheitsbremssystem (1) zwei Bogenhebel (10,20) aufweist, welche mit Bezug aufeinander um einen Schwenkpunkt (30), der sich mit den jeweiligen Zentren der Bogenhebel (10,20) deckt, schwenkbar sind, wobei eine Seite jedes Bogenhebels jeweils mit einem Bremsseil (93) der Bremshebel (92) verbunden ist, und wobei die andere Seite jedes Bogenhebels jeweils mit einer Rolle bereitgestellt ist, wobei jede Rolle ein größeres Rad (a) und ein kleineres Rad (b) aufweist, wobei jedes Rad eine Nut entlang seines Rands aufweist, wobei das größere Rad (a) ein Anschlussseil (952) der Hinterbremse hält und wobei das kleinere Rad (b) ein Anschlussseil (951) der Vorderbremse hält.

3. Ein Sicherheitsbremssystem (1), welches anbringbar ist an ein Fahrrad, an ein Motorrad oder an irgendeine andere Art von zweirädrigen linearen Fahrzeug, welches mit einem rechten und einem linken Bremshebel (92) eingerichtet ist, welche dazu eingerichtet sind, um jeweils das Anwenden einer Bremse auf ein Vorderrad bzw. auf ein Hinterrad des Fahrzeugs zu steuern, welches ferner aufweist eine Sicherheitsbremse, welche zwischen den beiden Bremshebeln (92) und der Vorderradbremse (941) und der Hinterradbremse (942) bereitgestellt ist, wobei das Sicherheitsbremssystem (1) die Vorderradbremse (941) und die Hinterradbremse (942) steuert, um jeweils das Bremsen anzuwenden, falls der linke Bremshebel oder der rechte Bremshebel (92) gezogen wird,
**dadurch gekennzeichnet, dass**
das Sicherheitsbremssystem (1) ferner eine Haltebasis (40) sowie eine obere Rolle (41) und eine untere Rolle (42), welche an der Haltebasis (40) angeordnet sind, aufweist, wobei die untere Rolle (42) stationär ist oder es ihr ermöglicht ist sich nach unten zu bewegen, wobei die obere Rolle (41) entlang eines Kanals bewegbar ist, welcher an der Haltebasis (40) angeordnet ist, wobei zugehörige Bremsseile (93) von jedem der Bremshebel (92) direkt mit der oberen Rolle (41) verbunden sind, so dass die Bremsseile (93) die oberen Rolle (41) ziehen, um diese entlang des Kanals nach oben zu bewegen, wenn einer der Bremshebel (92) gezogen wird, wobei jede von der oberen Rolle (41) und der unteren Rolle (42) mit einem größeren Rad und einem kleineren Rad bereitgestellt ist, wobei jedes Rad eine Nut entlang seines Rands aufweist, wobei das größere Rad (a) ein Anschlussseil (952) der Hinterbremse (942) hält und wobei das kleinere Rad (b) ein Anschlussseil (951) der Vorderbremse (941) hält.

4. Das Sicherheitsbremssystem gemäß Anspruch 3, **dadurch gekennzeichnet, dass** die Verhältnisse zwischen der größeren Rolle (a) und der kleineren Rolle (b) abhängig von Modell und Rahmen des Fahrzeugs ausgestaltet sind, um eine angemessene Bremskraft und ein Bremskraftverhältnis zwischen den Bremskräften, welche auf die Vorderradbremse (941) und auf die Hinterradbremse (942) aufgebracht werden, einzustellen.

5. Das Sicherheitsbremssystem gemäß Anspruch 4, **dadurch gekennzeichnet, dass** ein Anschlussseilhalterahmen (44) an der Haltebasis (40) bereitgestellt ist, damit beide Anschlusseile (951,952) diesen durchdringen und an dem Halterahmen (44) befestigt sind.

6. Ein Sicherheitsbremssystem (1), welches anbringbar ist an ein Fahrrad, an ein Motorrad oder an irgendeine andere Art von zweirädrigen linearen Fahrzeug, welches mit einem rechten und einem linken Bremshebel (92) eingerichtet ist, welche dazu eingerichtet sind, um jeweils das Anwenden einer Bremse auf ein Vorderrad bzw. auf ein Hinterrad des Fahrzeugs zu steuern, welches ferner aufweist eine Sicherheitsbremse, welche zwischen den beiden Bremshebeln (92) und der Vorderradbremse (941) und der Hinterradbremse (942) bereitgestellt ist, wobei das Sicherheitsbremssystem (1) die Vorderradbremse (941) und die Hinterradbremse (942) steuert, um jeweils das Bremsen anzuwenden, falls der linke Bremshebel oder der rechte Bremshebel (92) gezogen wird,
**dadurch gekennzeichnet, dass**
die Sicherheitsbremse zwei Bogenhebel (10,20) aufweist, welche mit Bezug aufeinander um einen Schwenkpunkt (30), der sich mit den jeweiligen Zentren der Bogenhebel (10,20) deckt, schwenkbar sind, wobei eine Seite jedes Bogenhebels jeweils mit einem der Bremsseile (93) der beiden Bremshebel (92) verbunden ist, und wobei eine andere Seite jedes Bogenhebels jeweils mit zwei Rädern bereitgestellt ist, wobei jedes Rad eine Nut entlang seines Rands aufweist, wobei die zwei Räder, welche von dem Schwenkpunkt weiter entfernt sind, ein Anschlussseil (952) der Hinterradbremse (941) halten und wobei die anderen zwei Räder, welche näher an dem Schwenkpunkt sind, ein Anschlussseil (951) der Vorderradbremse (942) halten.

7. Ein Sicherheitsbremssystem (1), welches anbringbar ist an ein Fahrrad, an ein Motorrad oder an irgendeine andere Art von zweirädrigen linearen Fahrzeug, welches mit einem rechten und einem linken Bremshebel (92) eingerichtet ist, welche dazu eingerichtet sind, um jeweils das Anwenden einer Bremse auf ein Vorderrad bzw. auf ein Hinterrad des Fahrzeugs zu steuern, welches ferner aufweist eine Sicherheitsbremse, welche zwischen den beiden Bremshebeln (92) und der Vorderradbremse (941) und der Hinterradbremse (942) bereitgestellt ist, wobei das Sicherheitsbremssystem (1) die Vorderradbremse (941) und die Hinterradbremse (942) steuert, um jeweils das Bremsen anzuwenden, falls der linke Bremshebel oder der rechte Bremshebel (92) gezogen wird,
**dadurch gekennzeichnet, dass**
die Sicherheitsbremse zwei Bogenhebel (10,20) aufweist, welche mit Bezug aufeinander um einen Schwenkpunkt (30), der sich mit den jeweiligen Zentren der Bogenhebel (10,20) deckt, schwenkbar sind, wobei eine Seite jedes Bogenhebels jeweils mit einem der Bremsseile (93) der beiden Bremshebel (92) verbunden ist, und wobei eine andere Seite von einem (10) der Bogenhebel jeweils mit zwei Rädern (a,b) bereitgestellt ist, wobei jedes Rad eine Nut entlang seines Rands aufweist, und wobei eine andere Seite des anderen Bogenhebels (20) an Anschlussseilen (951,952) der Vorderradbremse (941) und der Hinterradbremse (942), die von den zwei Rädern gehalten werden, befestigt ist.

8. Ein Sicherheitsbremssystem (1), welches anbringbar ist an ein Fahrrad, an ein Motorrad oder an irgendeine andere Art von zweirädrigen linearen Fahrzeug, welches mit einem rechten und einem linken Bremshebel (92) eingerichtet ist, welche dazu eingerichtet sind, um jeweils das Anwenden einer Bremse auf ein Vorderrad bzw. auf ein Hinterrad des Fahrzeugs zu steuern, welches ferner aufweist eine Sicherheitsbremse, welche zwischen den beiden Bremshebeln (92) und der Vorderradbremse (941) und der Hinterradbremse (942) bereitgestellt ist, wobei das Sicherheitsbremssystem (1) die Vorderradbremse (941) und die Hinterradbremse (942) steuert, um jeweils das Bremsen anzuwenden, falls der linke Bremshebel oder der rechte Bremshebel (92) gezogen wird, **dadurch gekennzeichnet, dass** die Sicherheitsbremse zwei Bogenhebel (10,20) aufweist, welche mit Bezug aufeinander um einen Schwenkpunkt (30), der sich mit den jeweiligen Zentren der Bogenhebel (10,20) deckt, schwenkbar sind, wobei eine Seite jedes Bogenhebels jeweils mit einem der Bremsseile (93) der beiden Bremshebel (92) verbunden ist, wobei eine andere Seite jedes Bogenhebels jeweils mit zwei Rädern bereitgestellt ist, wobei jedes Rad eine Nut entlang seines Rands aufweist, wobei zwei der Räder an derselben Position an einem Bogenhebel (20) befestigt sind, wobei zwei der Räder an unterschiedlichen Positionen des anderen Bogenhebels (10) befestigt sind, wobei der Bogenhebel (10), welcher die Räder aufweist, die an unterschiedlichen Positionen befestigt sind, an Anschlusseilen (951,952) der Vorderradbremse (941) und der Hinterradbremse (942) befestigt ist, wobei jedes Anschlussseil durch ein Rad des einen Bogenhebels und durch ein Rad des anderen Bogenhebels gehalten wird, wobei die zwei Räder, welche an derselben Position an einem Bogenhebel (20) befestigt sind, in Bezug aufeinander in ihrer Größe unterschiedlich sind und wobei die zwei Räder, welche an unterschiedlichen Positionen des anderen Bogenhebels (10) befestigt sind, die gleiche Größe haben.

9. Die verbesserte Konstruktion eines Sicherheitsbremssystems (1) gemäß Ansprüchen 1, 2, 6, 7 und 8, **dadurch gekennzeichnet, dass** ein Positionierungsmechanismus an beiden Hebelarmen (10,20) angeordnet ist, um die Position eines jeden Rads (a,b) einzustellen, wobei jedes Rad eine Nut entlang seines Rands aufweist.

10. Die verbesserte Konstruktion eines Sicherheitsbremssystems (1) gemäß Anspruch 9, **dadurch gekennzeichnet, dass** der Positionierungsmechanismus mehrere Löcher (101,102), welche an beiden Bogenhebeln (10,20) angeordnet sind, und eine Mehrzahl an Arretierelementen (S) aufweist, wobei die Arretierelemente (S) ausgewählte Löcher an beiden Bogenhebeln und die Räder (a,b), welche jeweils eine Nut an ihrem Rand aufweisen, durchdringen, um diese in Position zu befestigen.

11. Die verbesserte Konstruktion eines Sicherheitsbremssystems (1) gemäß Anspruch 10, **dadurch gekennzeichnet, dass** der Positionierungsmechanismus eine Führungsschiene (V), welche an beiden Bogenhebeln (10,20) angeordnet ist, und einen Gleiter aufweist, welcher mit der Führungsschiene (V) verbunden und darin platziert ist, damit die Räder, welche eine Nut entlang ihres Rands aufweisen, sich entlang der Führungsschiene (V) bewegen, und ein Haltemechanismus ist angeordnet, um die Position des Rads (a,b) sicher zu stellen, welches eine Nut entlang seines Rands aufweist.

12. Die verbesserte Konstruktion eines Sicherheitsbremssystems gemäß Anspruch 11, **dadurch gekennzeichnet, dass** der Haltemechanismus ein Arretierelement (S) aufweist, welches den Gleiter und die Räder (a,b) mit einer Nut entlang ihres Rands durchdringt.

13. Die verbesserte Konstruktion eines Sicherheitsbremssystems gemäß Anspruch 11, wobei das Arretierelement (S) sich auf ein Schnellverbindungselement bezieht.

**Revendications**

1. Système de freinage de sécurité (1) pouvant être installé sur une bicyclette, une motocyclette ou tout autre type de véhicule linéaire à deux roues comprenant des leviers de frein droit et gauche (92) adaptés pour commander respectivement l'application d'un frein à une roue avant et une roue arrière du véhicule, comprenant en outre un frein de sécurité prévu entre les deux leviers de frein (92) et les freins de roue avant (941) et arrière (942) ;
dans lequel le système de freinage de sécurité (1) commande à la fois le frein de roue arrière et le frein de roue avant pour appliquer respectivement le freinage si l'un du levier de frein gauche et du levier de frein droit (92) est tiré, le système de freinage de sécurité comprenant un mécanisme primaire et un mécanisme de transmission de puissance secondaire, les deux leviers de frein droit et gauche (92) étant raccordés au mécanisme primaire, le mécanisme primaire étant adapté pour transférer une force de freinage générée par traction de l'un ou l'autre levier de frein (92) au mécanisme de transmission de puissance secondaire ; la force de freinage étant en outre transférée aux freins de roue avant et arrière par l'intermédiaire du mécanisme de transmission de puissance secondaire, **caractérisé en ce que** le mécanisme de transmission de puissance secondaire est relié à une poulie constituée de deux rouleaux (a, b), les deux rouleaux maintenant un câble de commande (951, 952) provenant des freins de roue avant et arrière (941, 942), et les deux rouleaux se déplaçant l'un par rapport à l'autre lorsque la force de freinage est appliquée par le levier de frein (92) au mécanisme primaire, chaque rouleau étant constitué d'une roue plus grande (a) et d'une roue plus petite (b) chacune ayant une rainure le long de son bord; la roue plus grande (a) maintenant un câble de commande (952) provenant du frein arrière ; et la roue plus petite (b) maintenant un câble de commande (951) provenant du frein avant, de telle manière que soit appliqué un pourcentage de force de freinage plus élevé à la roue arrière qu'à la roue avant.

2. Système de freinage de sécurité selon la revendication 1, **caractérisé en ce que** le système de freinage de sécurité (1) a deux leviers d'arc (10, 20) pivotant l'un par rapport à l'autre à un point de pivot (30) coïncidant avec les centres respectifs des leviers d'arc (10, 20) ; un côté de chaque levier d'arc étant respectivement raccordé à un câble de frein (93) du levier de frein (92) ; l'autre côté de chaque levier d'arc étant respectivement pourvu d'un rouleau ; chaque rouleau étant constitué d'une roue plus grande (a) et d'une roue plus petite (b), chaque roue ayant une rainure le long de son bord ; la roue plus grande (a) maintenant un câble de commande (952) provenant du frein arrière ; la roue plus petite (b) maintenant un câble de commande (951) provenant du frein avant.

3. Système de freinage de sécurité (1) pouvant être installé sur une bicyclette, une motocyclette ou tout autre type de véhicule linéaire à deux roues adapté avec un levier de frein droit et gauche (92) adapté pour commander respectivement l'application d'un frein à une roue avant et une roue arrière du véhicule, comprenant en outre un frein de sécurité prévu entre les deux leviers de frein (92) et les freins de roue avant (941) et arrière (942), le système de freinage de sécurité (1) commandant à la fois le frein de roue arrière (942) et le frein de roue avant (941) pour appliquer respectivement le freinage si l'un du levier de frein gauche et du levier de frein droit est tiré, **caractérisé en ce que** le système de freinage de sécurité (1) comprend en outre une base de support (40) ainsi qu'un rouleau supérieur (41) et un rouleau inférieur (42) disposés sur la base de support (40) ; le rouleau inférieur (42) étant stationnaire ou libre de se déplacer vers le bas ; le rouleau supérieur (41) étant déplaçable le long d'un canal disposé sur la base de support (40) ; les câbles de frein (93) correspondants de chacun des leviers de frein (92) étant directement raccordés au rouleau supérieur (41) de sorte que les câbles de frein (93) tirent le rouleau supérieur (41) pour le déplacer vers le haut le long du canal lorsqu'un des leviers de frein (92) est tiré ; chacun du rouleau supérieur (41) et du rouleau inférieur (42) étant pourvu d'une roue plus grande et d'une roue plus petite, chacune des roues ayant une rainure le long de son bord ; la roue plus grande (a) maintenant un câble de commande (952) provenant du frein arrière (942) ; et la roue plus petite (b) maintenant un câble de commande (951) provenant du frein avant (941).

4. Système de freinage de sécurité selon la revendication 3, **caractérisé en ce que** les rapports entre les rouleaux plus grand (a) et plus petit (b) sont conçus suivant le modèle et le châssis du véhicule pour ajuster une force de freinage appropriée et un rapport de force de freinage entre les forces de freinage appliquées aux freins de roue avant (941) et arrière (942).

5. Système de freinage de sécurité selon la revendication 4, **caractérisé en ce qu'**un châssis de maintien d'un câble de commande (44) est prévu sur la base de support (40) pour les deux câbles de commande (951, 952) afin de pénétrer à travers et d'être fixé sur le châssis de maintien (44).

6. Système de freinage de sécurité (1) pouvant être installé sur une bicyclette, une motocyclette ou tout autre type de véhicule linéaire à deux roues adapté avec un levier de frein droit et gauche (92) adapté pour commander respectivement l'application d'un frein à une roue avant et une roue arrière du véhicule, comprenant en outre un frein de sécurité prévu entre les deux leviers de frein (92) et les freins de roue avant (941) et arrière (942) ; le système de freinage de sécurité (1) commandant à la fois le frein de roue arrière et le frein de roue avant pour appliquer respectivement le freinage si l'un du levier de frein gauche et du levier de frein droit (92) est tiré, **caractérisé en ce que** le frein de sécurité comprend deux leviers d'arc (10, 20) pivotant l'un par rapport à l'autre à un point de pivot (30) coïncidant avec les centres respectifs des leviers d'arc (10, 20) ; un côté de chaque levier d'arc étant respectivement raccordé à l'un des câbles de frein (93) depuis les deux leviers de frein (92) ; un côté opposé de chaque levier d'arc étant respectivement pourvu de deux roues, chaque roue ayant une rainure le long de son bord ; les deux roues qui sont plus éloignés du point de pivot maintiennent un câble de commande (952) provenant du frein de roue arrière (941) ; et les deux autres roues qui sont plus proches du point de pivot maintiennent un câble de commande (951) provenant du frein de roue avant (941).

**7.** Système de freinage de sécurité (1) pouvant être installé sur une bicyclette, une motocyclette ou tout autre type de véhicule linéaire à deux roues adapté avec un levier de frein droit et gauche (92) adapté pour commander respectivement l'application d'un frein à une roue avant et une roue arrière du véhicule, comprenant en outre un frein de sécurité prévu entre les deux leviers de frein (92) et les freins de roue avant (941) et arrière (942); le système de freinage de sécurité (1) commandant à la fois le frein de roue arrière et le frein de roue avant pour appliquer respectivement le freinage si l'un du levier de frein gauche et du levier de frein droit (92) est tiré, **caractérisé en ce que** le frein de sécurité comprend deux leviers d'arc (10, 20) pivotant l'un par rapport à l'autre à un point de pivot (30) coïncidant avec les centres respectifs des leviers d'arc (10, 20) ; un côté de chaque levier d'arc étant respectivement raccordé à l'un des câbles de frein (93) depuis les deux leviers de frein (92), un côté opposé d'un (10) des leviers d'arc étant respectivement pourvu de deux roues (a, b), chaque roue ayant une rainure le long de son bord ; un côté opposé de l'autre levier d'arc (20) est fixé aux câbles de commande (951, 952) du frein de roue avant (941) et du frein de roue arrière (942) maintenus par les deux roues.

**8.** Système de freinage de sécurité (1) pouvant être installé sur une bicyclette, une motocyclette ou tout autre type de véhicule linéaire à deux roues adapté avec un levier de frein droit et gauche (92) adapté pour commander respectivement l'application d'un frein à une roue avant et une roue arrière du véhicule, comprenant en outre un frein de sécurité prévu entre les deux leviers de frein (92) et les freins de roue avant (941) et arrière (942) ; le système de freinage de sécurité (1) commandant à la fois le frein de roue arrière et le frein de roue avant pour appliquer respectivement le freinage si l'un du levier de frein gauche et du levier de frein droit (92) est tiré, **caractérisé en ce que** le frein de sécurité comprend deux leviers d'arc (10, 20) pivotants l'un par rapport à l'autre à un point de pivot (30) coïncidant avec les centres respectifs des leviers d'arc (10, 20) ; un côté de chaque levier d'arc étant respectivement raccordé à l'un des câbles de frein (93) depuis les leviers de frein (92) ; un côté opposé de chaque levier d'arc étant respectivement pourvu de deux roues, chaque roue ayant une rainure le long de son bord ; deux des roues étant fixées au même point sur un levier d'arc (20), deux des roues étant fixées à des points différents de l'autre levier d'arc (10), le levier d'arc (10) comprenant les roues fixées à différents points est fixé aux câbles de commande (951, 952) du frein de roue avant (941) et du frein de roue arrière (942), chaque câble de commande étant maintenu par une roue d'un levier d'arc et une roue de l'autre levier d'arc ; les deux roues étant fixées au même point sur un levier d'arc (20) diffèrent en terme de taille l'une par rapport à l'autre ; et les deux roues fixées à différent points sur l'autre levier d'arc (10) ont la même taille.

**9.** Construction améliorée d'un système de freinage de sécurité (1) selon les revendications 1, 2, 6, 7, et 8, **caractérisée en ce qu'**un mécanisme de localisation est disposé sur les deux leviers d'arc (10, 20) pour ajuster la position de l'une quelconque de ces roues (a, b) ayant chacune une rainure le long de son bord.

**10.** Construction améliorée d'un système de freinage de sécurité (1) selon la revendication 9, **caractérisée en ce que** le mécanisme de localisation contient des trous multiples (101, 102) disposés sur les deux leviers d'arc (10, 20) et un ou une pluralité d'éléments de verrouillage (S) ; les éléments de verrouillage (S) pénétrant à travers des trous sélectionnés sur les deux leviers d'arc et les roues (a, b) ayant chacune une rainure le long de son bord pour les fixer en position.

**11.** Construction améliorée d'un système de freinage de sécurité (1) selon la revendication 10, **caractérisée en ce que** le mécanisme de localisation est constitué d'une glissière (V) disposée sur les deux leviers d'arc (10, 20) et un curseur combiné à et placé dans la glissière (V) pour les roues ayant chacune une rainure le long de son bord pour se déplacer le long de la glissière (V) ; et un mécanisme de retenue est disposé pour fixer la position de la roue (a, b) ayant une rainure le long de son bord.

**12.** Construction améliorée d'un système de freinage de sécurité selon la revendication 11, **caractérisée en ce que** le mécanisme de retenue contient un élément de verrouillage (S) pénétrant dans le curseur et les roues (a, b) avec une rainure le long de leur bord.

**13.** Construction améliorée d'un système de freinage de sécurité selon la revendication 11, dans laquelle l'élément de verrouillage (S) correspond à un connecteur rapide.

FIG.1

**FIG.2**

FIG.3

FIG.4

FIG.5

FIG.6

FIG.7

FIG.8

**FIG.9**

FIG.10

# FIG.11

# FIG.12

FIG.13

FIG.14

951

b

F

s

V

Fl

FIG.15

FIG.16

FIG.17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030140724 A1